# FASCICULE DE BREVET EUROPEEN

(11) **EP 1 596 116 B1**
(45) Date de publication et mention de la délivrance du brevet: **02.01.2008**
(21) Numéro de dépôt: 05356077.7
(22) Date de dépôt: 04.05.2005
(51) Int. Cl.: F16L 33/207

(54) **Bague de visualisation du sertissage d'un raccord pour tubes**
Sichtbarer Anzeigering der Pressverbindung einer Rohrkupplung
Visual indication ring of the pressfitting of a pipe coupling

(30) Priorité: 14.05.2004 FR 0405295
(43) Date de publication de la demande: 16.11.2005
(73) Titulaire: COMAP, 69008 Lyon (FR)
(72) Inventeur: Le Clinche, Pascal, 69008 Lyon (FR)
(74) Mandataire: Maureau, Philippe

(56) Documents cités:
- WO-A-01/73330
- DE-U- 29 920 371

## Description

La présente invention concerne une bague de visualisation de sertissage destinée à un raccord pour tubes.

Lors de l'installation d'un réseau de tubes, l'installateur réalise un assemblage comprenant notamment des tubes et des raccords avec plusieurs phases, successivement d'emboîtement d'un tube et d'un raccord, puis de sertissage au cours de laquelle le raccord est serti sur l'extrémité du tube pour garantir la tenue mécanique durable de l'installation et son étanchéité.

Afin de garantir l'étanchéité durable de l'installation, il est nécessaire de sertir tous les raccords. Diverses solutions ont été envisagées pour permettre à l'utilisateur de vérifier que tous les raccords ont été sertis.

La création d'une fuite provoquée au niveau du raccord tant que celui-ci n'est pas serti a notamment été envisagée. Cette approche permet à l'opérateur de détecter les raccords non sertis en mettant l'installation sous pression puis en repérant les fuites, soit visuellement, soit en constatant une pression plus faible que la pression normale dans l'installation, ce qui permet une vérification globale du sertissage des raccords de l'installation. Ces fuites peuvent être provoquées par des joints de forme spécifique, n'assurant pas d'étanchéité avant sertissage, ce qui implique une fabrication coûteuse et peut impliquer un positionnement particulier du joint dans une gorge prévue à cet effet. Les fuites peuvent également être provoquées par la forme du raccord, permettant ainsi d'utiliser des joints communs toriques de section constante.

En particulier, les documents DE 101 18 955 et WO 01/63160 décrivent deux dispositifs permettant de réaliser de telles fuites provoquées avant sertissage.

Il a également été envisagé d'utiliser des moyens de marquage présents sur chaque raccord sous forme de bague, comme décrit dans les documents WO/O1/21997, DE 100 02 916, ou DE 299 20 371 U. Toutefois, ces bagues se montrent difficiles à détruire lors du sertissage par les outils de sertissage, et produisent des débris qui restent sur le lieu de l'installation.

Le but de la présente invention est de fournir une solution permettant une visualisation fiable du sertissage, ne laissant pas de débris sur le site de l'installation, en utilisant des mâchoires de sertissage connues.

A cet effet, la présente invention porte sur une bague de visualisation du sertissage d'un raccord pour tubes, comprenant une portion annulaire permettant le maintien en position de la bague sur le corps du raccord, caractérisé en ce qu'elle comporte de plus au moins un segment situé à l'extérieur de la portion annulaire et disposé avant sertissage dans une première position dans laquelle il est maintenu en position par rapport à la portion annulaire par des premiers moyens de maintien en position et destiné à être déplacé lors du sertissage dans une seconde position, dans laquelle il est maintenu en position par rapport à la portion annulaire par des seconds moyens de maintien en position.

Ainsi, lors du sertissage, le ou les segments sont déplacés d'une première position vers une seconde, permettant ainsi la vérification du sertissage par un utilisateur, et les segments restent en position, ne causant pas la formation de débris sur le lieu de l'installation.

Avantageusement, les premiers moyens de maintien en position comportent des ponts de matière formés entre la portion annulaire et un segment.

Selon un mode de réalisation, les seconds moyens de maintien en position comportent au moins une patte destinée à être logée dans un logement.

Avantageusement, la bague comprend des moyens de guidage d'un segment de sa première position vers sa seconde position.

Selon un mode de réalisation, les moyens de guidage d'un segment de sa première position vers sa seconde position comportent des parties de la portion annulaire s'étendant sensiblement radialement et coopérant avec des parois s'étendant sensiblement radialement du segment.

Avantageusement, le segment présente une forme complémentaire de la portion annulaire, la bague formant après sertissage un ensemble annulaire.

Selon un mode de réalisation, les segments ont une forme générale en arc de cercle.

Avantageusement, la bague comporte des zones d'une première et d'une seconde couleur ou aspect de surface, les zones d'une seconde couleur ou aspect de surface étant localisés dans des zones visibles par un utilisateur avant sertissage et non visible par un utilisateur après sertissage.

La présente invention concerne également un raccord équipé d'une bague telle que décrite ci-dessus.

Avantageusement, ce raccord comporte une douille de sertissage présentant des ouvertures étant au moins partiellement obturées lors du sertissage par au moins un segment de la bague.

De toute façon, l'invention sera bien comprise à l'aide de la description qui suit, en référence au dessin schématique annexé, représentant à titre d'exemple non limitatif, une forme de réalisation d'une bague et d'un raccord selon l'invention.
La figure 1 est une vue en perspective d'un raccord reliant deux tubes, le raccord portant deux bagues selon l'invention, une première bague en position avant sertissage, et une seconde bague en position après sertissage.
La figure 2 est une vue en coupe du raccord de figure 1, des mâchoires étant disposé sur l'embout comprenant la bague en position non sertie.
La figure 3 est une vue de face d'une bague selon l'invention avant sertissage
La figure 4 est une vue de la bague de figure 3 après sertissage.
La figure 5 est une vue de l'arrière de la bague de figure 3 avant sertissage.
La figure 6 est une vue de côté de la bague de figure 3 avant sertissage.
La figure 7 est une vue de la bague de figure 3 vu en perspective avant sertissage.

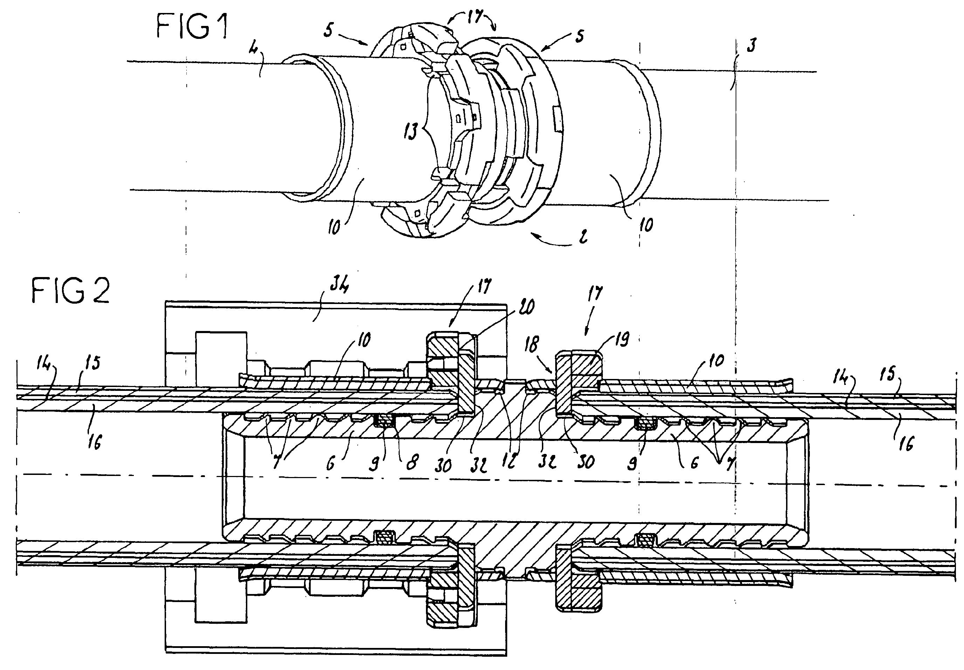

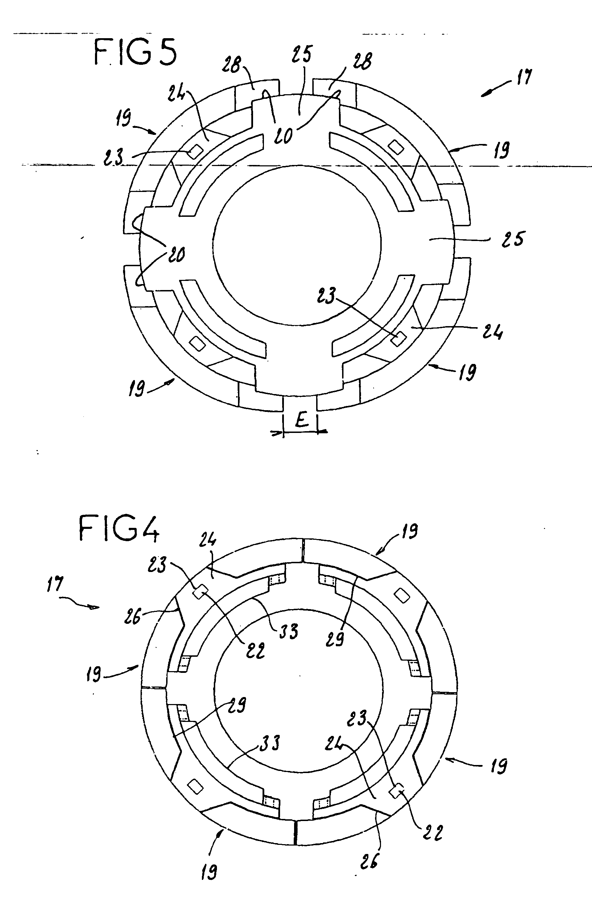

Les figures 1 et 2 représentent un raccord 2 pour tubes qui permet le raccordement d'un premier 3 et d'un second tube 4 sur deux embouts 5 comportant chacun une souche 6 formée dans le corps du raccord et destinée à coopérer avec la paroi interne de chaque tube, la souche étant munie de dents 7 permettant un maintien en position efficace du tube 3,4 et une gorge 8 dans laquelle est logée un joint d'étanchéité 9.

Chaque embout 5 comporte également une douille de sertissage 10, de diamètre supérieur au tube, qui est fixée sur le corps du raccord 2, par une de ses extrémités, dont le diamètre est rétréci pour coopérer avec une rainure extérieure 12 du corps du raccord pour permettre le maintien en position de la douille de sertissage par rapport au corps du raccord 2, la douille étant ajourée en présentant une forme de créneau avec des ouvertures 13.

Les tubes 3, 4 représentés sur les figures 1 et 2 sont de type multicouches, comportant une couche centrale métallique 14 et deux couches internes 15 et externes 16 de matière isolante.

Le raccord comporte de plus sur chaque embout, une bague de visualisation 17 selon l'invention.

Une bague de visualisation 17 du sertissage d'un raccord pour tube comprend une portion annulaire 18 permettant le maintien en position de la bague sur le corps du raccord 2, ainsi que des segments 19, de forme générale en arc de cercle, chaque segment étant situé à l'extérieur de la portion annulaire et disposé avant sertissage dans une première position dans laquelle il est maintenu en position par rapport à la portion annulaire par des premiers moyens de maintien en position constitués par des ponts de matière 20 formés entre la portion annulaire 18 et un segment 19 et destiné à être déplacé lors du sertissage dans une seconde position, dans laquelle il est maintenu en position par rapport à la portion annulaire 18 par des seconds moyens de maintien en position, constitué dans ce mode de réalisation par une patte 22 destinée à être logée dans un logement 23.

La bague 17 comprend des moyens de guidage du secteur de sa première position vers sa seconde position, constitués par des parties 24, 25 de la portion annulaire 18 s'étendant sensiblement radialement et coopérant avec des parois s'étendant sensiblement radialement du segment 19.

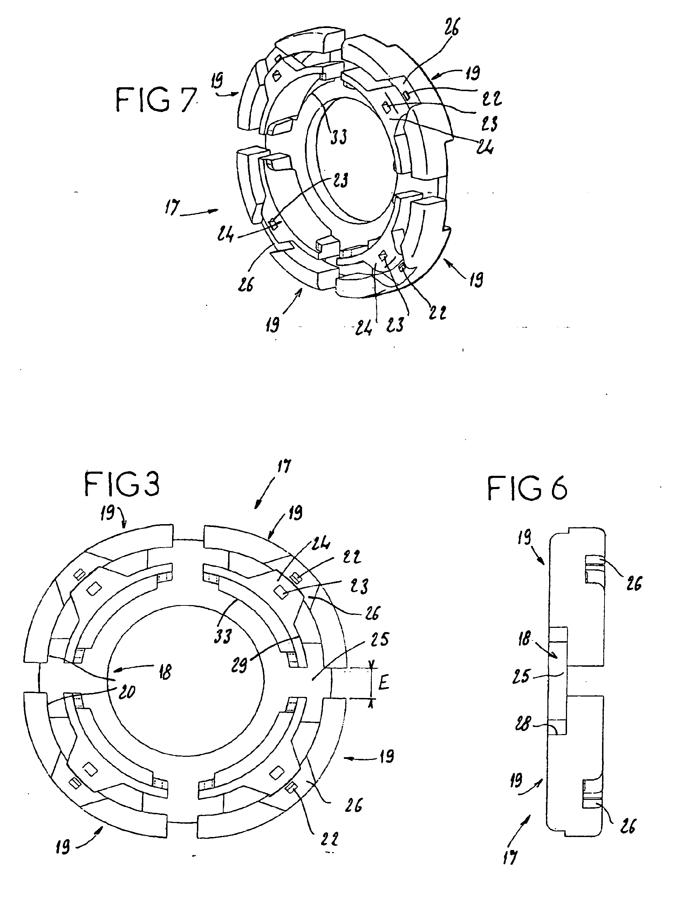

En particulier, dans le mode de représentation des figures 1 à 7, la portion annulaire présente des premières parties 24 de forme trapézoïdale s'étendant dans le sens radial, dans chacune desquelles est ménagée un logement 23. Cette partie 24 est située en regard d'une cavité 26 de forme complémentaire à la forme de la première partie 24, ménagée dans un segment 19, cavité dont la paroi comprend la patte destinée à être logée dans le logement 23.

Un pont de matière 20 relie le fond de la cavité 26 à l'extrémité de la partie 24.

Du coté opposé du segment 19 par rapport à la cavité 26, la portion annulaire 18 comporte des parties 25 situées en regard d'une encoche de forme complémentaire ménagée dans un segment 19, chaque segment 19 présentant deux encoches 28 dans le sens radial situées sur deux coins de la paroi du segment 18 opposée à celle contenant la cavité 26.

Un pont de matière 20 relie le fond d'une encoche 28 à l'extrémité d'une partie 25.

La présence des parties 25 et 26 permettent le guidage du segment de sa première position vers sa seconde position en coopérant avec les parois orientées radialement des encoches 28 et de la cavité 26, après que les ponts de matière 20 aient été rompus lors du sertissage par la pression des mâchoires de sertissage.

Dans sa seconde position, prise pendant le sertissage, le segment est logé entre les parties 24 et 25, et en butée radiale sur la partie inclinée du trapèze formé par la partie 24, ainsi que sur une surface cylindrique 29 située à la base des parties 24 et 25. Le segment est maintenu en position par la patte 22 qui est logée dans le logement 23.

Les parties 24 et 25 permettent de maintenir en position le segment dans sa seconde position, en addition de la coopération entre la patte 22 et le logement 23.

La bague 17 forme ainsi après sertissage un ensemble annulaire, les formes de la partie annulaire et des segments étant complémentaires.

La différence de géométrie de la bague avant et après sertissages est facilement repérable et permet de constater si le sertissage a été réalisé ou non.

La bague 17 est montée sur le raccord 2 par sa portion annulaire 18 au niveau d'une portion cylindrique 30 située à la base de la souche 6, entre une butée axiale 32 d'extrémité de la souche et la portion de souche comportant les dents 7 et coopérant avec l'extrémité du tube 3, 4.

La bague 17 est montée sur la souche du raccord avant la douille de sertissage 10, dont la partie d'extrémité comportant des ouvertures en forme de créneau peut passer à travers la portion annulaire 18 de la bague 17 par l'intermédiaire d'ouvertures 33 ménagées dans celle-ci, pour être fixée dans la rainure extérieure 12 du raccord 2.

Par son positionnement contre la butée 32, la portion annulaire 18 permet de plus de réaliser l'isolation galvanique entre le corps du raccord au niveau de la butée 32 et l'âme métallique d'un tube multicouche dont l'extrémité est logée radialement entre la souche et la douille de sertissage.

Dans le mode de représentation des figures 1 à 7, la bague 17 comporte quatre segments 18, un écart E existant entre deux segments successifs avant sertissage, les segments étant ensuite situés au contact après sertissage, sans écart. Avantageusement, l'écart entre deux segment se situe en regard d'une ouverture 13 constituant un créneau dans la douille de sertissage 10.

Ainsi, avant sertissage, il est possible de voir le matériau du tube par l'ouverture, puis celle-ci est obturée par les segments lors du sertissage. Cette disposition facilite la visualisation du sertissage.

Selon une variante, la bague 17 comporte des zones d'une première et seconde couleur ou aspect de surface, les zones d'une seconde couleur ou aspect de surface étant localisé dans des zones visibles par un utilisateur avant sertissage et non visible par un utilisateur après sertissage. En particulier, ces zones peuvent être situées au niveau des parois des cavités 26 ou encoches 28, qui ne sont pas visibles après sertissage.

Cette disposition permet de faciliter la visualisation en choisissant une seconde couleur facilement différenciable de la première. Si la seconde couleur apparaît, l'utilisateur peut identifier un raccord non serti.

Il est à noter que la bague utilisée est disposée à un emplacement et présente une forme permettant son utilisation avec des mâchoires de sertissage 34 de type connu.

Comme il va de soi, l'invention ne se limite pas aux formes de réalisation préférentielle décrite ci-dessus, à titre d'exemple non limitatif ; elle en embrasse au contraire toutes les variantes de réalisation dans le cadre des revendications ci-après.

## Revendications

1. Bague de visualisation (17) du sertissage d'un raccord (2) pour tubes (3, 4), comprenant une portion annulaire (18) permettant le maintien en position de la bague (17) sur le corps du raccord, comportant de plus au moins un segment (19) situé à l'extérieur de la portion annulaire (18) et disposé avant sertissage dans une première position dans laquelle il est maintenu en position par rapport à la portion annulaire (18) par des premiers moyens de maintien en position **caractérisé en ce que** ledit segment est destiné à être déplacé lors du sertissage dans une seconde position, dans laquelle il est maintenu en position par rapport à la portion annulaire (18) par des seconds moyens (22, 23) de maintien en position.

2. Bague de visualisation selon la revendication 1, **caractérisé en ce que** les premiers moyens de maintien en position comportent des ponts de matière formés entre la portion annulaire (18) et un segment (19).

3. Bague de visualisation selon la revendication 2, **caractérisé en ce que** les seconds moyens de maintien en position comportent au moins une patte (22) destinée à être logée dans un logement (23).

4. Bague de visualisation selon l'une des revendications 1 à 3, **caractérisée en ce qu**'elle comprend des moyens de guidage (24, 25) d'un segment de sa première position vers sa seconde position.

5. Bague de visualisation selon la revendication 4, **caractérisé en ce que** les moyens de guidage d'un segment de sa première position vers sa seconde position comportent des parties (24, 25) de la portion annulaire (18) s'étendant sensiblement radialement et coopérant avec des parois (26, 28) s'étendant sensiblement radialement du segment (19).

6. Bague de visualisation selon l'une des revendications 1 à 5, **caractérisé en ce que** le segment (19) présente une forme complémentaire de la portion annulaire (18), la bague (17) formant après sertissage un ensemble annulaire.

7. Bague selon l'une des revendications 1 à 6, **caractérisée en ce que** les segments (17) ont une forme générale en arc de cercle.

8. Bague selon l'une des revendications 1 à 8, **caractérisé en ce qu**'elle comporte des zones d'une première et d'une seconde couleur ou aspect de surface, les zones d'une seconde couleur ou aspect de surface étant localisés dans des zones visibles par un utilisateur avant sertissage et non visible par un utilisateur après sertissage.

9. Raccord (2) pour tubes équipé d'une bague selon l'une des revendications 1 à 8.

10. Raccord (2) pour tubes selon la revendication 9, **caractérisé en ce qu**'il comporte une douille de sertissage (10) présentant des ouvertures (13) ouvertures étant au moins partiellement obturées lors du sertissage par au moins un segment (19) de la bague (17).

## Claims

1. Indicator ring (17) for the crimping of a connection (2) for pipes (3, 4), comprising an annular portion (18) which permits retention in position of the ring (17) on the body of the connection, additionally comprising at least one segment (19) which is situated on the exterior of the annular portion (18), and is disposed before crimping takes place in a first position in which it is retained in position relative to the annular portion (18) by first means for retention in position, **characterised in that** the said segment is designed to be displaced during the crimping into a second position, in which it is retained in position relative to the annular portion (18) by second means (22, 23) for retention in position.

2. Indicator ring according to claim 1, **characterised in that** the first means for retention in position comprise bridges of material formed between the annular portion (18) and a segment (19).

3. Indicator ring according to claim 2, **characterised in that** the second means for retention in position comprise at least one lug (22) which is designed to be accommodated in a receptacle (23).

4. Indicator ring according to one of claims 1 to 3, **characterised in that** it comprises means (24, 25) for guiding a segment from its first position to its second position.

5. Indicator ring according to claim 4, **characterised in that** the means for guiding a segment from its first position to its second position comprise parts (24, 25) of the annular portion (18) which extend substantially radially, and co-operate with walls (26, 28) of the segment (19) which extend substantially radially.

6. Indicator ring according to one of claims 1 to 5, **characterised in that** the segment (19) has a form which is complementary to the annular portion (18), the ring (17) forming an annular assembly after it has been crimped.

7. Ring according to one of claims 1 to 6, **characterised in that** the segments (17) have a general form of an arc of a circle.

8. Ring according to any one of claims 1 to 8, **characterised in that** it comprises areas of a first and second colour or surface appearance, the areas of a second colour or surface appearance being localised in areas which are visible by a user before crimping takes place, and are not visible by a user after crimping takes place.

9. Connection (2) for pipes which is equipped with a ring according to one of claims 1 to 8.

10. Connection (2) for pipes according to claim 9, **characterised in that** it comprises a crimping sleeve (10) with openings (13) which are at least partially shut during the crimping by at least one segment (19) of the ring (17).

## Patentansprüche

1. Sichtbarmachungsring (17) für das Verpressen eines Anschlusses (2) für Rohre (3, 4), mit einem ringförmigen Abschnitt (18), der die Stellungs-Beibehaltung des Rings (17) am Körper des Anschlusses ermöglicht, sowie darüber hinaus mit mindestens einem Segment (19), das sich außen am ringförmigen Abschnitt (18) befindet und vor dem Verpressen in einer ersten Stellung angeordnet ist, in der es in Bezug auf den ringförmigen Abschnitt (18) von ersten Einrichtungen zur Stellungs-Beibehaltung in Stellung gehalten ist, **dadurch gekennzeichnet, dass** das Segment dazu bestimmt ist, beim Verpressen in eine zweite Stellung verlagert zu werden, in der es von zweiten Einrichtungen (22, 23) zur Stellungs-Beibehaltung in Bezug auf den ringförmigen Abschnitt (18) in Stellung gehalten ist.

2. Sichtbarmachungsring nach Anspruch 1, **dadurch gekennzeichnet, dass** die ersten Einrichtungen zur Stellungs-Beibehaltung Materialbrücken aufweisen, die zwischen dem ringförmigen Abschnitt (18) und einem Segment (19) ausgebildet sind.

3. Sichtbarmachungsring nach Anspruch 2, **dadurch gekennzeichnet, dass** die zweiten Einrichtungen zur Stellungs-Beibehaltung mindestens eine Klaue (22) aufweisen, die dazu bestimmt ist, in einer Aufnahme (23) aufgenommen zu werden.

4. Sichtbarmachungsring nach einem der Ansprüche 1 bis 3, **dadurch gekennzeichnet, dass** er Führungseinrichtungen (24, 25) für ein Segment aus seiner ersten Stellung in seine zweite Stellung umfasst.

5. Sichtbarmachungsring nach Anspruch 4, **dadurch gekennzeichnet, dass** die Führungseinrichtungen für ein Segment aus seiner ersten Stellung in seine zweite Stellung Teile (24, 25) des ringförmigen Abschnitts (18) aufweisen, die sich im Wesentlichen radial erstrecken und mit Wänden (26, 28) zusammenwirken, die sich im Wesentlichen radial vom Segment (19) erstrecken.

6. Sichtbarmachungsring nach einem der Ansprüche 1 bis 5, **dadurch gekennzeichnet, dass** das Segment (19) eine zum ringförmigen Abschnitt (18) komplementäre Form aufweisen, wobei der Ring (17) nach dem Verpressen eine ringförmige Einheit bildet.

7. Sichtbarmachungsring nach einem der Ansprüche 1 bis 6, **dadurch gekennzeichnet, dass** die Segmente (17) eine allgemeine Kreisbogenform haben.

8. Sichtbarmachungsring nach einem der Ansprüche 1 bis 7, **dadurch gekennzeichnet, dass** er Bereiche mit einer ersten und einer zweiten Farbe oder Oberflächenerscheinung umfasst, wobei die Bereiche mit einer zweiten Farbe oder Oberflächenerscheinung in Bereichen angeordnet sind, die vom Benutzer vor dem Verpressen gesehen werden können, aber nach dem Verpressen vom Benutzer nicht gesehen werden können.

9. Anschluss (2) für Rohre, der mit einem Ring nach einem der Ansprüche 1 bis 8 ausgestattet ist.

10. Anschluss (2) für Rohre nach Anspruch 9, **dadurch gekennzeichnet, dass** er eine Presshülse (10) umfasst, die zwei Öffnungen (13) aufweist, wobei die Öffnungen beim Verpressen von mindestens einem Segment (19) des Rings (17) verschlossen werden.
